# EUROPEAN PATENT APPLICATION

(11) **EP 4 729 735 A1**
(43) Date of publication of application: **22.04.2026**
(21) Application number: 24207839.2
(22) Date of filing: 21.10.2024
(51) Int. Cl.: E05D 15/10, B60L 53/16, E05F 15/63, E05F 15/649

(54) **DOOR ASSEMBLY**

(71) Applicant: Motherson Innovations Deutschland GmbH, 70327 Stuttgart (DE)
(72) Inventor: Rhee, GeonHwan, 14556 Bucheon (KR); Lee, KyungJun, 14556 Bucheon (KR); Song, HongGjun, 14556 Bucheon (KR)

(57) **Abstract**

The present subject matter discloses a door assembly that comprises a base plate with a groove and a door with a lever. The door assembly further comprises a drive member pivotally coupled to the base plate and a driven member pivotally coupled to the base plate. The driven member coupled to the drive member through a connecting member. A swiveling motion is generated in the drive member through a drive unit, which enables the connecting member to move within a first slot of the drive member, and such movement of the connecting member triggers a swiveling motion in the driven member to enable the lever to move within a second slot of the driven member, and along the groove. The door assembly is configured to translate a swiveling motion of the drive member and the driven member into a linear movement of the lever thereby enabling the door to transition from a closed position to an open position and vice-versa.

## Description

The present disclosure generally relates to the field of door assemblies. More particularly, the present disclosure pertains to a door assembly for a vehicle to reduce an area of protrusion of a door in an open position.

Various mechanisms are typically utilized to open and close doors, and they vary based on the type of door and its operational systems. Traditionally, door assemblies have employed mechanisms involving connectors such as gooseneck links or hinges. These connectors not only facilitate the connection between the inner door surface and the body of the vehicle but also a protrusion from the body to enable door opening. When the door is fully open, for example extending to about 90 degrees or more from the body, the door requires more space. However, these traditional mechanisms have drawbacks in terms of space limitations for operations. More specifically, the larger the doors, the more they protrude from the body, making them more susceptible to damage from external impacts.

Furthermore, in such traditional mechanisms, the weight of the door is solely supported by these connectors, leading to excessive stress on them. The repetitive opening and closing of the doors induce cyclic loading or fatigue, in addition, to wear and tear, particularly in gooseneck links or hinges, thereby compromising their rigidity and overall operability.

Some approaches or solutions have been attempted in the domain and specifically for automobiles to address a few of such challenges. Patent document US2023/0349205 for example, discloses a vehicle charging door assembly that enhances operability when opened and reduces protrusion. The assembly includes a charging door for opening and closing a charging port on a panel, a main link hinge connecting the vehicle body and inner surface of the charging door, and a sub-link hinge connecting the vehicle body and inner surface of the charging door at a position apart from the main link. This design maintains the charging door's inner surface within a predetermined distance from the panel when opened. However, the complexity of the solution offered in this patent document would lead to excessive stress and wear on the assembly links during repetitive operations.

Therefore, there is a necessity for an improved door assembly and an operating mechanism to address shortcomings of the conventional door assemblies, particularly in reducing door protrusion in an open position and simplifying operations.

This summary is provided to introduce concepts related to a door assembly for opening and closing, the concepts are further described below in the detailed description. This summary is neither intended to identify essential features of the claimed subject matter nor is it intended for use in determining or limiting the scope of the present subject matter.

In an embodiment, the present disclosure relates to a door assembly for opening and closing a charging door or a fuel tank/ gas tank door of vehicles. More particularly, the door assembly reduces area of protrusion of the door in an open position.

In accordance with an embodiment, the door assembly includes a base plate with a groove and a door with a lever, the door is configured to move from a first position to a second position. Additionally, the door assembly includes a drive member that has a first end portion, a second end portion, and a first slot. The first end portion of the drive member is pivotally coupled to the base plate. Further, the door assembly includes a driven member movably coupled to the drive member through a connecting member. The driven member has a first end portion and a second end portion. The first end portion of the driven member is pivotally coupled to the base plate and the second end portion of the driven member includes a second slot configured to engage with the lever.

A swiveling motion of the drive member enables the movement of the connecting member within the first slot, and such movement of the connecting member triggers swiveling motion in the driven member to enable the lever to move within the second slot, and along the groove.

In an embodiment, the door assembly includes a drive unit operatively coupled to the first end portion of the drive member to allow the swiveling motion of the drive member.

In an embodiment, the base plate may include a cavity configured to accommodate the drive member and allow the drive member to swivel within the cavity.

In an embodiment, the lever may have a first end portion and a second end portion. The first end portion of the lever may be operationally attached to the door and the second end portion of the lever traverses the groove within the base plate and engages with the second slot of the driven member.

In an embodiment, the groove may have a first portion and a second portion. The movement of the lever in the first portion enables the door to protrude out of a surface of a body of the vehicle and the movement of the lever in the second portion enables the door to slide along the surface of the body.

In another embodiment, an assembly is disclosed. The assembly includes a base plate having a groove and a lever. Additionally, the assembly includes a drive member having a first end portion, a second end portion, and a first slot. The first end portion of the drive member is pivotally coupled to the base plate. Further, the assembly includes a driven member coupled to the drive member through a connecting member. The driven member has a first end portion and a second end portion. The first end portion of the driven member is pivotally coupled to the base plate. The second end portion of the driven member includes a second slot configured to engage with the lever.

A swiveling motion of the drive member enables the movement of the connecting member within the first slot, and such movement of the connecting member triggers a swiveling motion of the driven member to enable the lever to move within the second slot, and along the groove.

In embodiment, the assembly may include a drive unit operatively coupled to the drive member to allow the swiveling motion of the drive member.

In embodiment, the groove may comprise a first portion, and a second portion, the movement of the lever in the first portion enables a cover to protrude out of a first surface and the movement of the lever in the second portion enables the cover to slide along the first surface.

In embodiment, the lever has a first end portion and a second end portion. The first end portion of the lever may be attached to the cover and the second end portion of the lever may traverses the groove and engages with the second slot of the driven member.

In embodiment, the first slot may be located along the length of the drive member and the second slot may be located along the length of the driven member.

In embodiment, the drive member and the driven member may be configured to translate a swiveling motion of the drive member and the driven member into a linear movement of the lever.

It is an object of the subject matter to provide a door assembly that reduces the protrusion area of a door in an open position.

It is another object of the subject matter to provide a door assembly that reduces wear and tear while operating.

It is another object of the subject matter to provide a door assembly that moves a door in a linear direction along a surface of a body of a vehicle while maintaining a minimum distance from the surface of the body.

It is another object of the subject matter to provide a door assembly that ensures a smooth transition between a door's open and closed position and vice versa.

These embodiments, and features of the subject matter will become more fully apparent when the following detailed description is read with the accompanying drawings. However, both the foregoing summary of the subject matter and the following detailed description of it represent one potential implementation or embodiment and are not restrictive of the present disclosure or other alternate implementations or embodiments of the subject matter.

A clear understanding of the key features of the subject matter summarized above may be had by reference to the appended drawings, which illustrate the assembly of the subject matter, although it will be understood that such drawings depict preferred embodiments of the subject matter and, therefore, are not to be considered as limiting its scope about other embodiments which the subject matter is capable of contemplating. Accordingly:
FIG. 1A illustrates a schematic representation of a door assembly in a first position (with specific portion being enlarged for clarity), in accordance with an exemplary embodiment of the subject matter;
FIG. 1B illustrates a schematic representation of a door assembly in an intermediate position (with specific portion being enlarged for clarity), in accordance with an exemplary embodiment of the subject matter;
FIG. 1C illustrates a schematic representation of a door assembly in a second position (with specific portion being enlarged for clarity), in accordance with an exemplary embodiment of the subject matter;
FIG. 1D illustrates a schematic representation (front view and side view) of a lever of a door, in accordance with an exemplary embodiment of the subject matter;
FIG. 1E illustrates a schematic representation of a door assembly mounted on a vehicle to open and close a charging door, in accordance with an exemplary embodiment of the subject matter; and
FIG. 2 illustrates a schematic representation of an assembly for moving a cover from a first position to a second position, in accordance with an exemplary embodiment of the present subject matter.

The following is a detailed description of implementations of the present disclosure depicted in the accompanying drawings. The implementations are in such detail as to clearly communicate the disclosure. However, the amount of detail offered is not intended to limit the implementations, but it is to cover all modifications, equivalents, and alternatives falling within the spirit and scope of the present disclosure. While aspects of described door assemblies can be implemented in any number of different environments, applications, and/or configurations, the embodiments are described in the context of the following exemplary configuration(s).

It is understood that the term "vehicle" or "vehicular" or other similar terms as used herein are inclusive of motor vehicles, in general, such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred herein, a hybrid vehicle is a vehicle that has two or more sources of power, for example, both gasoline-powered and electric-powered vehicles.

An embodiment of the present disclosure relates to the field of door assemblies. More particularly, the present disclosure pertains to a door assembly for a vehicle to reduce an area of protrusion of a door in an open position.

In an embodiment, the present disclosure provides a door assembly for an opening and closing of a charging port door or fuel tank/ gas tank door. The door assembly is mounted on the door or bonnet of a vehicle for opening and closing the door. The door assembly has a base plate with a groove and a door with a lever. The door is configured to move from a first position to a second position. The door assembly further includes a drive member pivotally coupled to the base plate and a driven member pivotally coupled to the base plate. The drive member is movably coupled to the driven member through a connecting member to translate swiveling motion into vertical and linear movement by engaging with the groove. The base plate can be fixed in a housing of the door. Further, the housing can accommodate the complete door assembly.

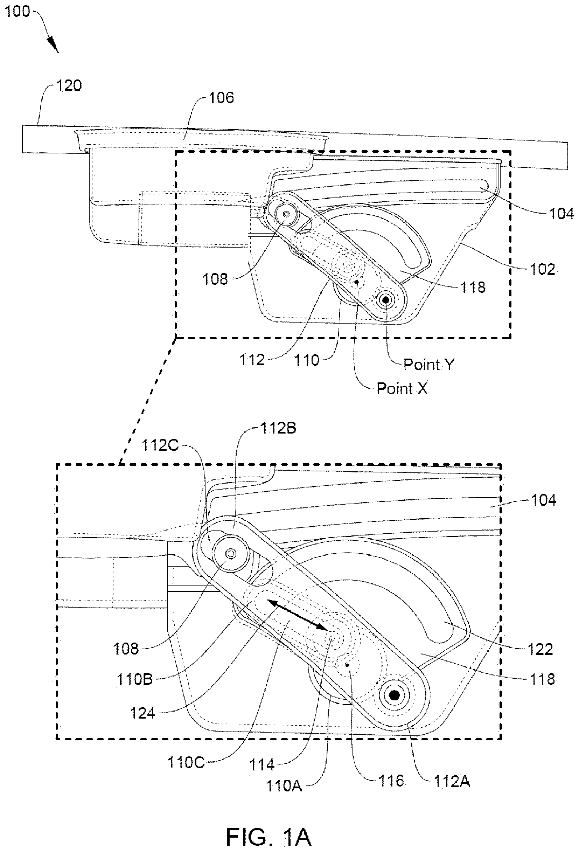

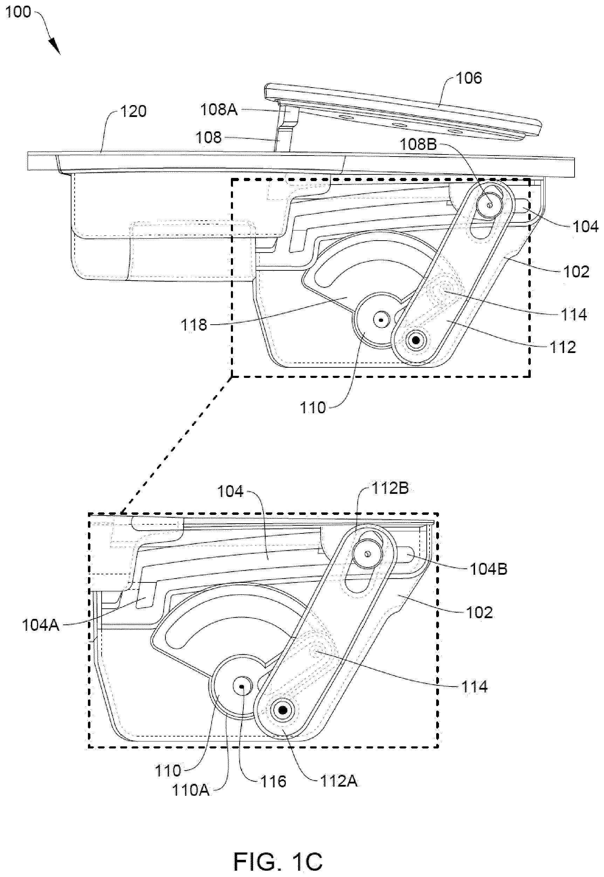

Referring to FIGs. 1A to 1C, a schematic representation of a door assembly 100 in multiple positions is disclosed. The door assembly 100 (hereinafter referred to as an assembly 100) is configured to open and close a charging port door and/or fuel tank/ gas tank door. The assembly 100 includes a base plate 102 with a groove 104 and a door 106 with a lever 108. The door 106 is configured to move from a first position to a second position and from the second position back to the first position. The first position of the door 106 is a closed position (as depicted in FIG. 1A) and the second position of the door 106 is an open position (as depicted in FIG. 1C).

Further, the assembly 100 includes a drive member 110 and a driven member 112. The drive member 110 has a first end portion 110A, a second end portion 110B, and a first slot 110C. The first end portion 110A of the drive member 110 is pivotally coupled to the base plate 102. The driven member 112 movably coupled to the drive member 110 through a connecting member 114. More specifically, the driven member 112 is movably coupled to the first slot 110C of the drive member 110. The driven member 112 has a first end portion 112A and a second end portion 112B. The first end portion 112A of the driven member 112 is pivotally coupled to the base plate 102 and the second end portion 112B of the driven member 112 has a second slot 112C configured to engage with the lever 108.

The drive member 110 is configured to swivel which enables the connecting member 114 to move within the first slot 110C, and such movement of the connecting member 114 triggers a swiveling motion of the driven member 112 to enable the lever 108 to move within the second slot 112C, and along the groove 104. Such a swiveling motion of the drive member 110, the movement of the connecting member 114, the swiveling motion of the driven member 112 causes to move the door 106 from the first position (closed position) to the second position (open position).

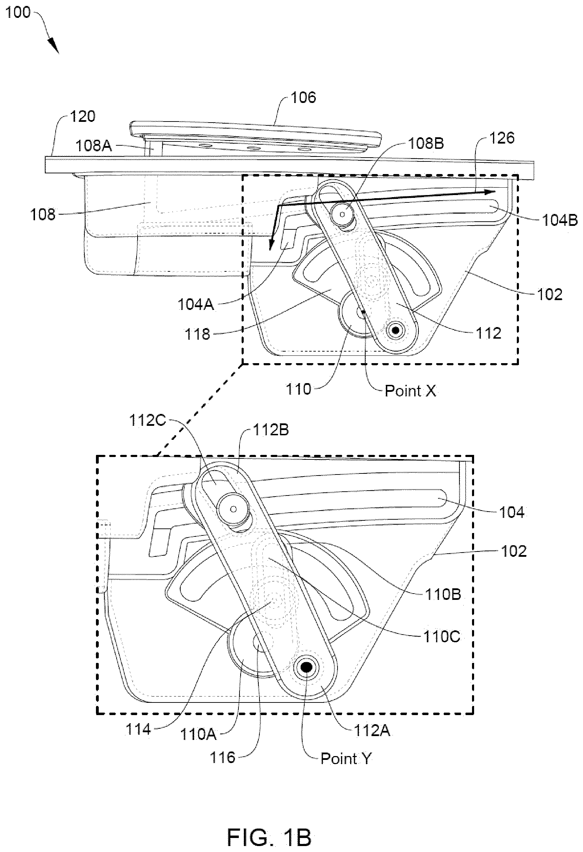

In an embodiment, the assembly 100 includes a drive unit 116 operatively coupled to the drive member 110 and configured to swivel the drive member 110 for example about a pivot point X (as depicted in FIG. 1A) of the drive member 110. The swiveling motion of the drive member 110 enables the connecting member 114 to facilitate the swiveling motion to the driven member 112 to swivel the driven member 112 about a pivot point Y (as depicted in FIG. 1B). The swiveling motion of the driven member 112 enables the lever 108 to move within the groove 104 of the base plate 102 thereby moving the door 106 from the first position (closed position) to the second position (open position).

In an exemplary embodiment, the drive unit 116 may include a driving shaft, driving motor, and a driving gear. The driving shaft may be movably coupled to the first end portion 110A of the drive member 110 and the driving motor to facilitate rotational movement to the drive member 110. The driving motor may be electrically coupled to a central power unit of the vehicle or any other external power source. The central power unit may be a battery of the vehicle. Additionally driving gear may be configured between the driving motor and the driving shaft based on specific requirements. The driving gear may be configured to regulate the movement of the driving shaft, which results in the corresponding eventual movement of the door 106.

In an embodiment, the groove 104 includes a first portion 104A and a second portion 104B. The movement of the lever 108 in the first portion 104A enables the door 106 to protrude out of a surface 120 of a body of the vehicle and the movement of the lever 108 in the second portion 104B enables the door 106 to slide along the surface 120 of the body of the vehicle. The first portion 104A of the groove 104 facilitates vertical movement of the door 106 and whereas the second portion 104B of the groove 104 facilitates linear movement of the door 106.

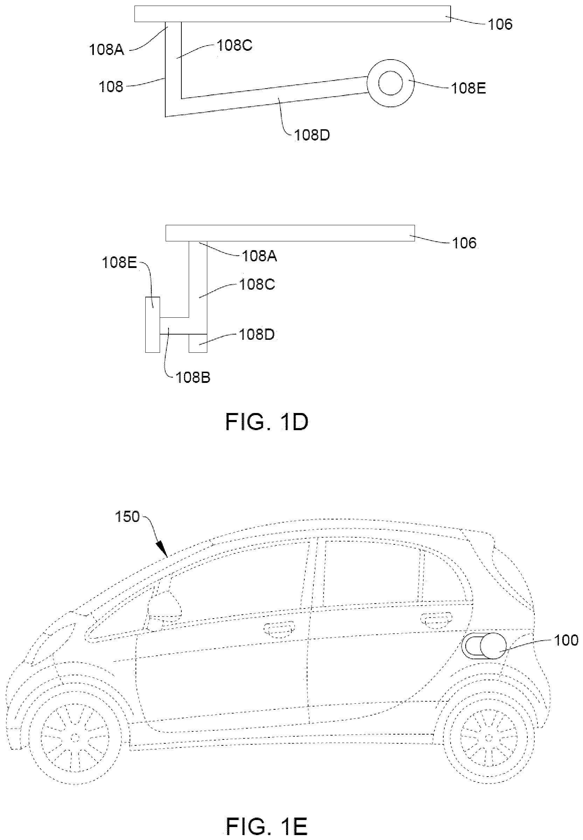

As illustrated in Fig 1D (front view and side view) an embodiment of the lever 108 is shown having a first end portion 108A and a second end portion 108B. The first end portion 108A of the lever 108 is operationally attached to the door 106 and the second end portion 108B of the lever 108 traverses the groove 104 and engages with the second slot 112C of the driven member 112. The second end portion 108B of the lever 108 may be configured with an engaging means (not shown in the figures) that engages with the groove 104 and the second slot 112C.

In an embodiment, the lever 108 may include three segments: a first segment 108C, a second segment 108D, and a third segment 108E. The first segment 108C extends from the door 106 towards the second segment 108D and the second segment 108D further extending towards the third segment 108E that changes direction to traverse the groove 104, and extends from the second segment 108D to the second end portion 108B of the lever 108. This configuration allows the lever 108 to effectively translate the movement of the driven member 112 through the groove 104 and the second slot 112C to the movement of the door 106. One exemplary configuration of the lever 108 as illustrated above provides mechanical advantage, smooth operation, and effective engagement with the driven member 112 and thereby helping to ensure flexibility in the movement of the door 106.

In an embodiment, the connecting member 114 may be located on a shank portion of the driven member 112. The swiveling movement of the driven member 112 enables the lever 108 (specifically the second end portion 108B and the third segment 108E) to move in the first portion 104A of the groove 104 to pop up the door 106 in a vertical direction. The pop-up position of the door 106 is an intermediate position (as depicted in FIG. 1B). Further, the lever 108 moves within the second portion 104B of the groove 104 along with the driven member 112, and such movement of the lever 108 moves the door 106 further in a linear direction while maintaining minimum space between the surface 120 of the body of the vehicle and an inner portion of the door 106. Such a configuration of the assembly 100 in the intermediate position and further the movement in a linear direction assists in reducing the area of protrusion of the door 106 in an open position during operations. The door 106 may be configured to move from the first position (closed position) to the intermediate position to pop-up the door 106 and from the intermediate position to the second position (open position) to completely open the door 106.

In an embodiment, the first slot 110C is located along the length of the drive member 110 and the second slot 112C is located along the length of the driven member 112 and towards the second end portion 112B of the driven member 112. The first slot 110C allows the connecting member 114 to follow a first predefined path 124 (depicted in FIG. 1A) that enables the driven member 112 to swivel about the pivot point Y. Such a movement of the driven member 112 enables the lever 108 to follow a second predefined path 126 which facilitates the door 106 to move from the first position to the second position.

The opening operation of the door 106 is performed mainly in three positions that include the first position, the intermediate position, and the second position. The first position of the door 106 is the closed position and the intermediate position of the door 106 is the pop-up position of the door 106. The pop-up position happens due to the movement of the lever 108 in the first portion 104A of the groove 104. The second position of the door 106 is the open position wherein the door is arranged substantially parallel to the surface 120 of the body while keeping a minimum distance therebetween the inner surface of the door and the body of the vehicle, thereby being able to minimize any possible unnecessary interference of the door with the body of the vehicle during handling operation.

In an exemplary embodiment, the base plate 102 may include a cavity 118 configured to accommodate the drive member 110 and allow the drive member 110 to swivel within the cavity 118. In addition, the cavity 118 may have a slot 122 (as depicted in FIG. 1A) which may provide support to the second end portion 110B of the drive member 110 for stability and smooth movement within the cavity 118. Further, the drive member 110 may include a knob 110D attached to the second end portion 110B of the drive member 110 and can be configured within the slot 122 of the cavity 118. The knob 110D may be configured to slide within the slot 122 and provide stability to the drive member 110. The slot 122 can be used for monitoring the operation of the assembly 100 and also provide easy access for maintenance.

Referring to FIG. 1E, a schematic diagram of the assembly 100 configured in a vehicle 150 is illustrated. The assembly 100 is designed to control the opening and closing of a charging door/ fuel/gas tank door or cabin (collectively referred to as door 106) of the vehicle 150, ensuring a minimal gap between the surface 120 of the vehicle body and the inner surface of the door 106. This minimal gap may enhance the aesthetic appeal of the vehicle 150 during operations such as charging of the vehicle or refuelling. The assembly 100 utilizes a compact and efficient mechanism that allows the door 106 to occupy less space when in the open position. This space-saving design is particularly advantageous in environments where space is limited, such as crowded parking areas or narrow garages, as it reduces the risk of accidental damage to the door 106 from surrounding objects.

Additionally, the assembly 100 is versatile and can also be adapted for use in cabin doors of the vehicle 150. This configuration facilitates smooth and controlled opening and closing of the cabin doors, enhancing passenger convenience and safety including space-saving during ingress or egress. The mechanism can be integrated with the vehicle's electronic systems to allow for automatic or remote-controlled operation, adding to the overall functionality and user experience. The robust design ensures durability and reliability, making it suitable for various vehicle types and conditions.

In yet another embodiment, for example, when the door 106 cannot be opened due to a failure of the drive unit 116, the vehicle 150 may provide a manual override option. In this scenario, the assembly 100 may include a manual release mechanism that allows the user to open the door 106 without the use of the drive unit 116. Specifically, the door 106 may be opened manually by pushing it inward (into the body of the vehicle). This action triggers the assembly 100 to partially disengage the door 106 from its locked position, allowing it to pop out slightly. Once the door 106 is released from its locked position, the user may either pull or slide the door 106 manually to the open position. The manual operation may be facilitated by a set of mechanical linkages or members including but not limited to drive and driven members such as 110, and 112 within the assembly 100, which may be designed to additionally respond to such manual push by the user. This ensures that even in the absence of power or if the drive unit 116 fails, the door 106 can still be accessed and operated safely. Additionally, visual or tactile indicators may be provided to guide the user in performing the manual operation, ensuring ease of use and accessibility during emergencies.

In one implementation, the assembly 100 can be integrated into various types of vehicles, ranging from cars to trucks and other motor vehicles. Another function of the assembly 100 lies in ensuring smooth operation even in challenging conditions, such as malfunctions during vehicle operations. The assembly 100 enhances the reliability and durability of components. Furthermore, the placement of the assembly 100 within the vehicle facilitates convenient access to crucial elements like seats, charging ports, or fuel ports. For instance, when the assembly 100 is integrated into the vehicle doors or bonnet, it can efficiently control the opening and closing of the charging port or fuel/gas tank port or bonnet of the vehicle, facilitating hassle-free charging/fuelling/ maintenance processes.

The assembly represents a significant advancement in vehicle technologies, addressing key concerns regarding reducing the protrusion area of the door in an open position which enhances operational reliability and accessibility of the charging or fuel ports of the vehicles. Further, the integration of the assembly into the structure of the vehicle not only enhances the aesthetic appeal but also contributes to the overall efficiency and convenience of the vehicle. The assembly enables quick and easy access to charging ports of electric vehicles or ensures the secure opening and closure of fuel ports. The assembly serves as a vital component in modernizing and optimizing the closing and opening of the door.

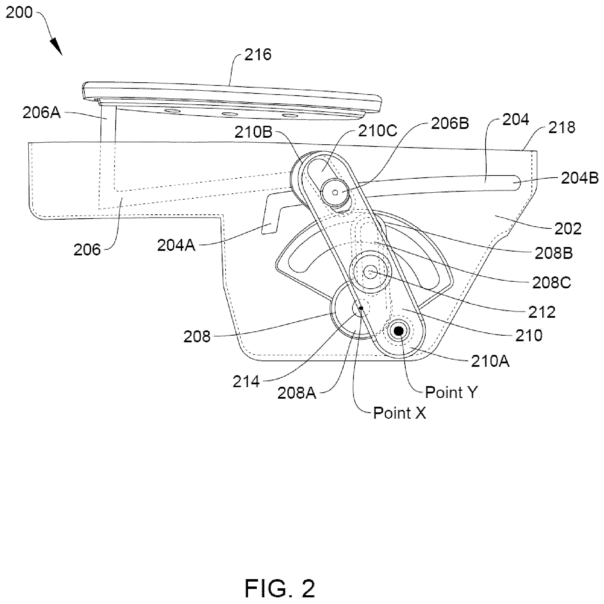

Referring to FIG.2, a schematic representation of an assembly 200 is disclosed. The assembly 200 is configured to move a cover 216 from a first position to a second position and vice-versa. The assembly 200 includes a base plate 202 with a groove 204 and a lever 206. Further, the assembly 200 includes a drive member 208 that has a first end portion 208A, a second end portion 208B, and a first slot 208C. The first end portion 208A of the drive member 208 is pivotally coupled to the base plate 202. Further, the assembly 200 includes a driven member 210 coupled to the drive member 208 through a connecting member 212. The driven member 210 has a first end portion 210A and a second end portion 210B. The first end portion 210A of the driven member 210 is pivotally coupled to the base plate 202 and the second end portion 210B of the driven member 210 has a second slot 210C engaging the lever 206. The drive member 208 is configured to a swivel about a pivot point X of the drive member 208 which enables the connecting member 212 to move within the first slot 208C, and such movement of the connecting member 212 triggers a swiveling motion in the driven member 210 about a pivot point Y to enable the lever 206 to move within the second slot 210C and along the groove 204.

Furthermore, the assembly 200 includes a drive unit 214 operatively coupled to the drive member 208 and configured to swivel the drive member 208 about the X-point. The drive unit 214 can be an electric motor equipped with a gearbox to manipulate the speed of the drive member 208 which leads to smooth movement of the lever 206 to move from the first position to the second position and vice versa. The groove 204 includes a first portion 204A and a second portion 204B. The movement of the lever 206 in the first portion 204A enables the cover 216 to protrude out of a first surface 218 and the movement of the lever 206 in the second portion 204B enables the cover 216 to slide along to the first surface 218. Moreover, the lever 206 has a first end portion 206A and a second end portion 206B. The first end portion 206A of the lever 206 is attached to the cover 216, and the second end portion 206B of the lever 206 traverses the groove 204 and engages with the second slot 210C of the driven member 210.

In an embodiment, the drive member 208 and the driven member 210 are configured to translate swiveling motion into vertical and linear movement by engaging with the groove 204. The groove 204 guides the movement of the driven member 210 and the lever 206 to move along the groove 204. In addition, the vertical movement of the lever 206 pops-up the cover 216 from the first surface 218 and the linear movement of the lever 206 moves the cover 216 in the linear direction while maintaining minimum space between the cover 216 and the first surface 218.

In an embodiment, the assembly 200 moves the cover 216 in a linear direction while maintaining a minimal distance from the first surface 218. It ensures a smooth transition between the open and closed positions of the cover 216, and vice versa. Further, the assembly 200 minimizes the area of protrusion of the cover 216 in an open position, thereby reducing wear and tear during operation.

The assembly 100 reduces the area of protrusion of the door 106 that allows the door 106 to open and close in less space such as crowded parking areas or narrow garages. Further, the assembly 100 ensures a smooth transition between the open and closed positions of the door 106 and vice versa reducing wear and tear while operating.

The foregoing description of various variations/embodiments have been presented for purposes of illustration and description. It is not intended to be exhaustive or to limit the disclosure to the precise forms disclosed, and obviously, many modifications and variations are possible in light of the above teachings. The exemplary variations, as described above, were chosen and described in order to best explain the principles of the disclosure and one of its practical applications.

### Reference Signs

100 - door assembly
102, 202 - base plate
104, 204 - groove
104A, 204A - first portion
104B, 204B - second portion
106 - door
108, 206 - lever
108A, 206A - first end portion of the lever
108B, 206B - second end portion of the lever
108C - first segment
108D - second segment
108E - third segment
110, 208 - drive member
110A, 208A - first end portion of the drive member
110B, 208B- second end portion of the drive member
110C, 208C - first slot of the drive member
110D - knob
112, 210 - driven member
112A, 210A - first end portion of the driven member
112B, 210B - second end portion of the driven member
112C, 210C - second slot of the driven member
114, 212 - connecting member
116, 214 - drive unit
118 - cavity
120 - surface of the vehicle body
122 - slot
124 - first predefined path
126 - second predefined path
150 - vehicle
200 - assembly
216 - cover
218 - first surface of the vehicle body

## Claims

1. A door assembly (100) comprising:
a base plate (102) having a groove (104);
a door (106) configured to move from a first position to a second position, the door (106) having a lever (108);
a drive member (110) having a first end portion (110A), a second end portion (110B), and a first slot (110C), the first end portion (110A) of the drive member (110) pivotally coupled to the base plate (102); and,
a driven member (112) movably coupled to the drive member (110) through a connecting member (114), the driven member (112) having a first end portion (112A) and a second end portion (112B), the first end portion (112A) of the driven member (112) pivotally coupled to the base plate (102), the second end portion (112B) of the driven member (112) having a second slot (112C) engaging the lever (108);
**characterized in that**
a swiveling motion of the drive member (110) enables the movement of the connecting member (114) within the first slot (110C), and such movement of the connecting member (114) triggers a swiveling motion in the driven member (112) to enable the lever (108) to move within the second slot (112C), and along the groove (104).

2. The door assembly (100) as claimed in claim 1, further comprising a drive unit (116) operatively coupled to the first end portion (110A) of the drive member (110) to allow the swiveling motion of the drive member (110).

3. The door assembly (100) as claimed in claim 1, wherein the base plate (102) has a cavity (118) configured to accommodate the drive member (110) and allow the drive member (110) to swivel within the cavity (118).

4. The door assembly (100) as claimed in claim 1, wherein the lever (108) has a first end portion (108A) and a second end portion (108B), the first end portion (108A) operationally attached to the door (106), and the second end portion (108B) traverses the groove (104) and engages with the second slot (112C) of the driven member (112).

5. The door assembly (100) as claimed in claim 1, wherein the groove (104) comprises:
a first portion (104A), and
a second portion (104B),
the movement of the lever (108) along the first portion (104A) enables the door (106) to protrude out of a surface (120) of a body,
the movement of the lever (108) along the second portion (104B) enables the door (106) to slide along the surface (120) of the body.

6. A vehicle (150) comprising the door assembly (100) as claimed in claims 1-5.

7. An assembly (200) comprising;
a base plate (202) having a groove (204);
a lever (206);
a drive member (208) having a first end portion (208A), a second end portion (208B), and a first slot (208C), the first end portion (208A) of the drive member (208) pivotally coupled to the base plate (202); and,
a driven member (210) movably coupled to the drive member (208) through a connecting member (212), the driven member (210) having a first end portion (210A) and a second end portion (210B), the first end portion (210A) of the driven member (210) pivotally coupled to the base plate (202), the second end portion (210B) of the driven member (210) having a second slot (210C) engaging the lever (206);
**characterized in that**
a swiveling motion of the drive member (208) enables the movement of the connecting member (212) within the first slot (208C), and such movement of the connecting member (212) triggers a swiveling motion in the driven member (210), thereby enabling the lever (206) to move within the second slot (210C), and along the groove (204).

8. The assembly (200) as claimed in claim 7, further comprising a drive unit (214) operatively coupled to the drive member (208) to allow the swiveling motion of the drive member (208).

9. The assembly (200) as claimed in claim 7, wherein the lever (206) has a first end portion (206A) and a second end portion (206B), the first end portion (206A) is attached to a cover (216), and the second end portion (206B) of the lever (206) traverses the groove (204) and engages the second slot (210C) of the driven member (210).

10. The assembly (200) as claimed in claim 7, wherein the groove (204) comprises:
a first portion (204A), and
a second portion (204B),
the movement of the lever (206) in the first portion (204A) enables the cover (216) to protrude out of a first surface (218), and
the movement of the lever (206) in the second portion (204B) enables the cover (216) to slide along the first surface (218).

11. The assembly (200) as claimed in claim 1 and 7, wherein the assembly (100, 200) is configured to translate a swiveling motion of the drive member (110, 208) and the driven member (112, 210) into linear movement of the lever (108, 206).
